# FASCICULE DE BREVET EUROPEEN

(11) **EP 3 488 517 B1**
(45) Date de publication et mention de la délivrance du brevet: **20.11.2019**
(21) Numéro de dépôt: 18755508.1
(22) Date de dépôt: 28.06.2018
(51) Int. Cl.: H02K 35/02

(54) **CONVERTISSEUR D'ÉNERGIE ÉLECTROMAGNÉTIQUE**
ELEKTROMAGNETISCHER ENERGIEWANDLER
ELECTROMAGNETIC ENERGY CONVERTER

(30) Priorité: 30.06.2017 FR 1756233
(43) Date de publication de la demande: 29.05.2019
(73) Titulaire: Commissariat à l'énergie atomique et aux énergies alternatives, 75015 Paris (FR)
(72) Inventeur: DELETTE, Gérard, 38100 Grenoble (FR); TOSONI, Olivier, 38100 Grenoble (FR)
(74) Mandataire: Brevalex
(86) Numéro de dépôt international: PCT/FR2018/051589
(87) Numéro de publication internationale: WO 2019/002775

(56) Documents cités:
- EP-A1- 2 445 092
- WO-A2-2008/019054
- FR-A1- 2 928 501
- GB-A- 2 397 698
- GB-A- 2 517 963

## Description

### DOMAINE TECHNIQUE

La présente invention concerne un convertisseur d'énergie électromagnétique et/ou micro générateur électromagnétique. En particulier, la présente invention concerne un convertisseur électromagnétique destiné à être mis en œuvre dans un interrupteur autonome.

### ART ANTÉRIEUR

Un convertisseur d'énergie électromagnétique et/ou micro générateur électromagnétique (ci-après « dispositif »), connu de l'état de la technique, comprend :
- une culasse ferromagnétique ;
- une bobine conductrice formée par l'enroulement d'un fil conducteur autour d'une section de la culasse ferromagnétique ;
- un aimant principal, déporté de la bobine, formant avec la culasse un circuit magnétique fermé.

Selon cette configuration, le flux magnétique généré par l'aimant principal est guidé au travers de la bobine conductrice par la culasse ferromagnétique.

Le principe général de fonctionnement du dispositif est basé sur l'activation d'une variation temporelle du flux magnétique traversant la bobine conductrice de manière à faire apparaître une tension électrique aux bornes de cette dernière.

A cet égard, le dispositif est également doté d'un système d'activation mécanique dont l'action permet d'activer la variation temporelle de flux magnétique. En particulier, la variation temporelle de flux magnétique peut être induite par un déplacement de l'aimant principal ou de la bobine conductrice, tel que décrit dans les documents US2014285296 A1 [1] et US2014139048 A1 [2] cités à la fin de la description.

Cependant, dispositifs décrits dans les documents [1] et [2] ne sont pas satisfaisants.

En effet, le flux magnétique traversant la bobine conductrice est limité par les pertes magnétiques (autrement dit la fraction du flux magnétique produit par l'aimant qui ne traverse pas la bobine) et la saturation magnétique de la culasse ferromagnétique, restreignant, par conséquent, la variation de flux magnétique utile à la génération de la tension électrique au bornes de la bobine conductrice.

Par ailleurs, le système d'activation mécanique nécessite l'emploi d'un module d'échappement et/ou d'accumulation d'énergie, tels que des lames à ressort, ou encore des cliquets, permettant un mouvement rapide de la bobine conductrice ou de l'aimant principal de manière à ce qu'une tension appréciable puisse être atteinte aux bornes de la bobine conductrice. A cet égard, il est rappelé qu'en vertu de la loi de Lenz, la tension aux bornes de la bobine conductrice est proportionnelle à la dérivée temporelle du flux magnétique traversant ladite bobine.

A titre d'exemple, un déplacement d'une durée de l'ordre de la milliseconde est nécessaire pour un dispositif, présentant un volume de l'ordre de 1 cm³, pour générer une tension électrique de l'ordre du Volt aux bornes de la bobine conductrice. Ceci est notamment le cas des convertisseurs d'énergie électromagnétique mis en œuvre dans des interrupteurs autonomes.

Cependant, le module d'échappement et/ou d'accumulation d'énergie entre généralement à chaque utilisation en contact (chocs, frottement) avec le circuit magnétique générant ainsi des problèmes de fiabilité et d'usure.

Les documents WO 2008/019054, GB 2 397 698, EP 2 445 092, GB 2 517 963, et FR 2928501 divulguent chacun dispositif magnétique pour la génération d'une tension aux bornes d'une bobine conductrice.

Un but de la présente invention est de proposer un convertisseur d'énergie électromagnétique et/ou un micro générateur électromagnétique compact, et susceptible de présenter une tension électrique appréciable aux bornes de la bobine conductrice.

Un autre but de la présente invention est de proposer un convertisseur d'énergie électromagnétique et/ou un micro générateur électromagnétique dont la commande de déclenchement n'entre pas en contact, par exemple mécanique, avec le circuit magnétique.

Un autre but de la présente invention est de proposer un convertisseur d'énergie électromagnétique plus simple à mettre œuvre.

### EXPOSÉ DE L'INVENTION

Les buts énoncés ci-dessus sont au moins en partie atteints par un dispositif électromagnétique comprenant :
- une bobine conductrice comprenant une première et une seconde extrémité, et s'étendant selon un axe principal XX',
- un aimant principal, présentant une symétrie de révolution autour de l'axe YY' perpendiculaire à l'axe XX', maintenu par des moyens de maintien dans un volume interne V formé par la bobine conductrice, les moyens de maintien autorisant un mouvement de rotation dudit aimant principal autour d'un axe YY', perpendiculaire à l'axe principal XX', entre deux positions d'équilibre stable dites, respectivement, première position d'équilibre et seconde position d'équilibre,
- un premier aimant et un second aimant actionneurs, disposés dans une glissière, respectivement, en regard de la première extrémité et de la seconde extrémité, présentant chacun une polarité magnétique dans un plan perpendiculaire à l'axe YY', les premier et second aimants actionneurs étant agencés pour être entraînés en translation simultanément dans le même sens et parallèlement à l'axe principal XX' dès lors qu'une force est exercée sur l'un ou l'autre des premier et second aimants, la translation des premier et second aimants selon l'un ou l'autre des sens définis par la direction de l'axe principal XX' étant adapté pour contraindre l'aimant principal à adopter, respectivement, la première position d'équilibre ou la seconde position d'équilibre.
   « être entraîné en translation » veut également dire « coulisser ».
   « la translation » veut également dire « le coulissement »

Selon un mode de mise en œuvre, la polarité magnétique du premier aimant (31) forme un angle alpha avec l'axe principal XX', et la polarité magnétique du second aimant (32) forme avec l'axe principal XX', soit un angle -alpha, soit 180° + alpha soit 180° - alpha.

Selon un mode de mise en œuvre, le dispositif comprend un moyen de rappel agissant sur l'un des premier aimant et second aimant de sorte que l'aimant principal soit contraint d'adopter une des deux positions d'équilibre stable lorsqu'aucune force extérieure n'est exercée sur le premier aimant et le second aimant, le moyen de rappel comprenant avantageusement un ressort.

Selon un mode de mise en œuvre, le coulissement de l'un ou l'autre des premier aimant et second aimant en direction de l'aimant principal est limité, respectivement, par une première et une seconde butées, la première et la seconde butées étant agencées pour empêcher tout contact entre l'aimant principal et, respectivement, le premier aimant et le second aimant.

Selon un mode de mise en œuvre, le premier aimant, le second aimant, et l'aimant principal sont alignés selon l'axe principal XX'.

Selon un mode de mise en œuvre, l'aimant principal présente une symétrie de révolution autour de l'axe YY'.

Selon un mode de mise en œuvre, le dispositif comprend en outre une première culasse et une seconde culasse ferromagnétiques disposées symétriquement l'une de l'autre par rapport à un plan comprenant l'axe YY' et l'axe principal XX'.

Selon un mode de mise en œuvre, la première culasse et la seconde culasse comprennent chacune deux extrémités agencées de manière à former un logement à l'intérieur duquel l'aimant principal est maintenu, le logement étant de forme complémentaire à l'aimant principal.

Selon un mode de mise en œuvre, le premier aimant et le second aimant sont disposés dans une glissière.

Selon un mode de mise en œuvre, un espacement est ménagé entre la première et la seconde culasse, ledit espacement étant agencé pour guider le premier et le second aimant lors de leur coulissement.

Selon un mode de mise en œuvre, le dispositif comprend deux aimants stabilisateurs, dits, respectivement, troisième aimant et quatrième aimant, fixes et destinés à stabiliser dans l'une des deux positions d'équilibre stable l'aimant principal dès lors que le dispositif est au repos, les aimants stabilisateurs étant agencés de manière à ce que l'aimant stabilisateur stabilisant l'aimant principal selon l'une des deux positions d'équilibre voit ses pôles alignés avec ceux de l'aimant principal.

Selon un mode de mise en œuvre, le troisième et le quatrième aimants sont disposés en regard, respectivement, de la première et de la seconde extrémité, et chaque aimant stabilisateur est déporté selon une direction différente de l'axe principal XX', l'aimant principal est, en outre, monté sur un support comprenant un glissière, la glissière est agencée pour que le mouvement de rotation de l'aimant principal autour de l'axe YY' entre les deux positions d'équilibre soit accompagné d'un mouvement de translation, permettant l'alignement des pôles de l'aimant principal avec le troisième aimant et le quatrième aimant lorsque ledit aimant principal se trouve respectivement dans la première position d'équilibre ou dans la seconde position d'équilibre.

Selon un mode de mise en œuvre, le troisième et le quatrième aimant ont chacun leur polarité magnétique parallèle à l'axe principal XX', et en opposition l'une de l'autre.

Selon un mode de mise en œuvre, les troisième et quatrième aimants sont en vis-à-vis, respectivement, du second aimant, et du premier aimant.

Selon un mode de mise en œuvre, l'aimant principal comprend en outre un cale disposée sur un de ses pôles, et destiné à s'interposer entre l'aimant principal et le troisième ou le quatrième aimant lorsque l'aimant principal se trouve, respectivement, dans la première position d'équilibre ou la seconde position d'équilibre.

Selon un mode de mise en œuvre, le dispositif comprend en outre une culasse ferromagnétique qui comprend entre deux extrémités de culasse s'interposant entre la cale de l'aimant principal et le troisième ou le quatrième aimant lorsque l'aimant principal se trouve, respectivement, dans la première position d'équilibre ou la seconde position d'équilibre.

Selon un mode de mise en œuvre, le dispositif comprend soit un convertisseur d'énergie électromagnétique, soit un micro générateurélectromagnétique.

L'invention concerne également un interrupteur comprenant un dispositif électromagnétique selon la présente invention.

### BRÈVE DESCRIPTION DES DESSINS

D'autres caractéristiques et avantages apparaîtront dans la description qui va suivre du dispositif électromagnétique selon l'invention, donnés à titre d'exemples non limitatifs, en référence aux dessins annexés dans lesquels :
- la figure 1 est une représentation schématique selon un plan de coupe comprenant l'axe principal XX', et perpendiculairement à l'axe YY', d'un dispositif électromagnétique selon une première variante d'un premier mode de réalisation de la présente invention;
- les figures 2a et 2b sont des représentations schématiques selon un plan de coupe comprenant l'axe principal XX', et perpendiculairement à l'axe YY', du dispositif électromagnétique selon un second mode de réalisation de la présente invention, à la figure 2a, l'aimant principal étant dans une première position d'équilibre, et à la figure 2b, l'aimant principal étant dans une seconde position d'équilibre ;
- les figures 3a et 3b sont des représentations schématiques selon un plan de coupe comprenant l'axe principal XX', et perpendiculairement à l'axe YY', d'un dispositif électromagnétique selon deux autres variantes du premier mode de réalisation de la présente invention.

### EXPOSÉ DÉTAILLÉ DE MODES DE RÉALISATION PARTICULIERS

L'invention décrite de manière détaillée ci-dessous met œuvre un convertisseur d'énergie électromagnétique et/ou micro générateur électromagnétique 10 (ci-après « dispositif électromagnétique ») comprenant une bobine conductrice 20 hébergeant dans son volume interne V un aimant principal 30. En particulier, l'aimant principal 30 est susceptible d'exécuter un mouvement de rotation, sous l'action d'aimants actionneurs, afin de générer une variation temporelle de flux magnétique dans la bobine conductrice 20, et ainsi faire apparaître une tension électrique aux bornes de ladite bobine.

Tout au long de la description, on considérera que l'alignement des pôles de deux aimants signifie que les polarisations magnétiques de ces deux aimants sont alignées selon un même axe et dans le même sens. En particulier, dès lors que les pôles de deux aimants sont alignés, une force magnétique attractive s'exerce entre ces deux aimants.

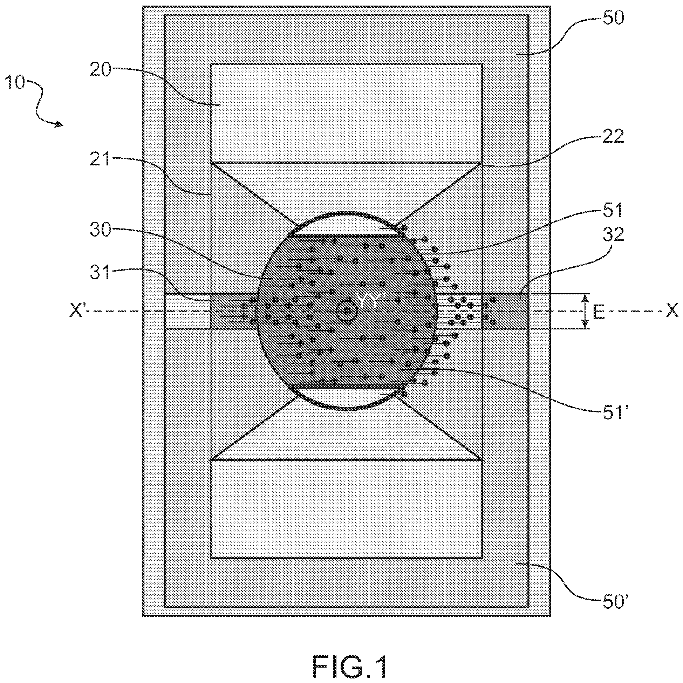

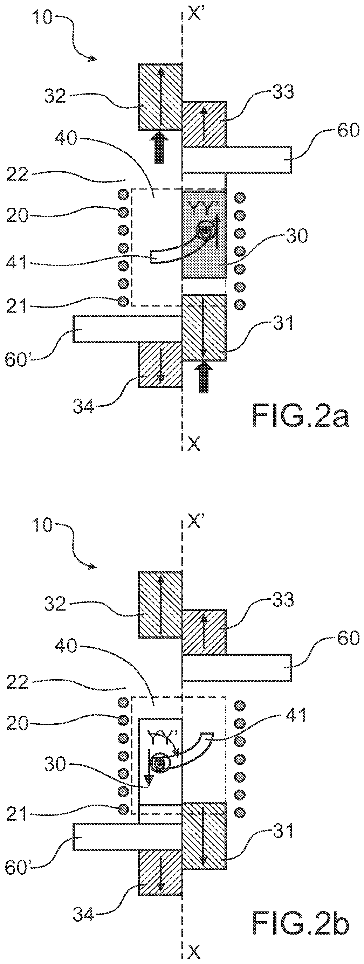

De manière générale, le dispositif électromagnétique 10, et tel qu'illustré aux figures 1 et 2a-2b, comprend une bobine conductrice 20 qui s'étend selon un axe principal XX' et comprend deux extrémités dites, respectivement, première extrémité 21 et seconde extrémité 22.

Par axe principal XX', on entend un axe de symétrie de la bobine conductrice 20.

La bobine conductrice 20 est faite d'un enroulement d'un fil conducteur, par exemple un fil en cuivre, selon un axe principal XX'. La bobine conductrice 20 comprend par ailleurs un volume interne V ouvert selon les deux extrémités de ladite bobine. Il est évident sans qu'il soit nécessaire de le préciser que le fil de cuivre comprend deux extrémités qui sont, dans toute la suite de la présente description nommées bornes de la bobine conductrice 20.

Le dispositif électromagnétique 10 comprend également un aimant principal 30 disposé dans le volume interne V de la bobine conductrice 20.

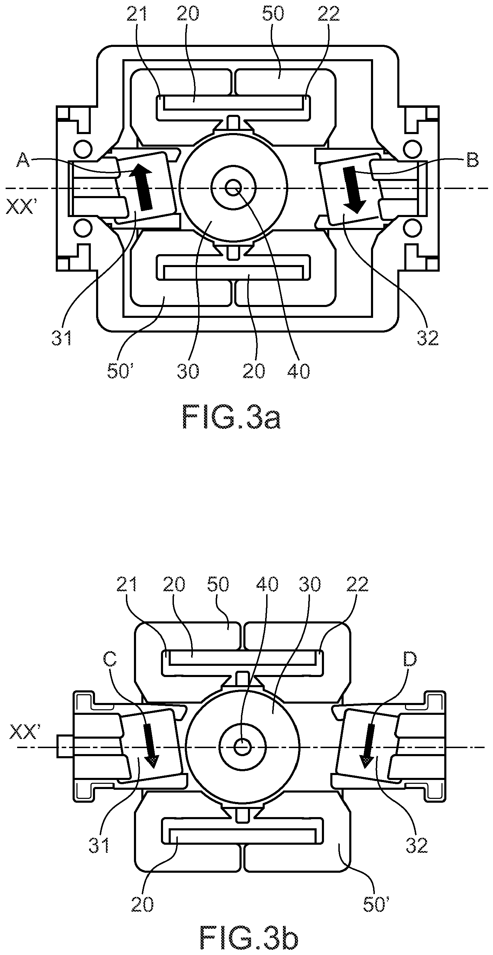

En particulier, l'aimant principal 30 est maintenu par des moyens de maintien 40 (fig. 2a et 2b, 3a et 3b) dans le volume interne V de la bobine.

Les moyens de maintien 40 autorisent la rotation de l'aimant principal 30 selon un axe YY', perpendiculaire à l'axe principal XX', entre deux positions d'équilibre stable, dites, respectivement, première position et seconde position, sous l'action du mouvement d'aimants actionneurs dits, respectivement, premier aimant 31 et second aimant 32.

Le premier aimant 31 et le second aimant 32 sont disposés en regard, respectivement, de la première extrémité 21 et de la seconde extrémité 22 de la bobine conductrice 20.

Le premier aimant 31 et le second aimant 32 peuvent être de forme allongée, par exemple de forme parallélépipédique, et leur polarité magnétique orientée selon leur plus grande dimension. Autrement dit, dans le cas d'aimants de forme parallélépipédique, la polarité peut être orientée selon la longueur dudit aimant.

Par ailleurs, par forme parallélépipédique, on entend également un aimant de forme généralement parallélépipédique, et dont la plus petite face présente une forme concave. Par petite face d'un aimant rectangulaire, on entend la face de plus petites dimensions (de plus petite surface).

Le premier aimant 31 et le second aimant 32 peuvent être identiques. Par identiques, on entend même forme et même polarité magnétique.

La polarité magnétique, dans la présente demande, désigne également l'orientation des pôles d'un aimant. En particulier, la polarité magnétique relie, au sein de l'aimant, le pôle sud au pôle nord dudit aimant. Le pôle sud désigne, par convention, une section de surface de l'aimant au niveau de laquelle entre le flux magnétique. Inversement, le pôle nord correspond à une autre section de surface de l'aimant au niveau de laquelle sort le flux magnétique.

Par ailleurs, le premier aimant 31 et le second aimant 32 sont agencés de sorte que la polarité magnétique de chacun de ces deux aimants soit dans un plan perpendiculaire à l'axe YY', par exemple parallèles à l'axe principal XX'. Egalement, les polarités magnétiques du premier aimant 31 et du second aimant 32 peuvent être en opposition l'une de l'autre. Autrement dit, la polarité magnétique du premier aimant 31 est orientée selon un sens opposé à celle du second aimant 32. Il est entendu que les polarisations magnétiques du premier aimant 31 et du second aimant 32 ne sont pas nécessairement selon l'axe principal XX' (autrement dit, elles ne sont pas nécessairement colinéaires à l'axe XX').

En outre, le premier aimant 31 et le second aimant 32 sont agencés pour coulisser simultanément dans le même sens et parallèlement à l'axe principal XX' dès lors qu'une force est exercée sur l'un ou l'autre des premier et second aimant 32.

L'agencement permettant le coulissement du premier aimant 31 et du second aimant 32 peut comprendre des moyens de coulissement, par exemple, une glissière. Cependant, l'invention n'est pas limitée à ce seul dispositif de coulissement, et l'homme du métier avec ses connaissances générales peut mettre en œuvre tout autre moyen ou dispositif susceptible de permettre le coulissement du premier aimant 31 et du second aimant 32.

Il est entendu sans qu'il soit nécessaire de le préciser que l'amplitude de coulissement de chacun des deux aimants est la même lors de leur coulissement (par amplitude de coulissement, on entend distance).

Un tel effet peut être obtenu en liant par exemple de manière fixe le premier aimant 31 et le second aimant 32.

Le coulissement du premier aimant 31 et du second aimant 32 selon l'un ou l'autre des sens définis par la direction de l'axe principal XX' est adapté pour contraindre l'aimant principal 30 à adopter, respectivement, la première position d'équilibre et la seconde position d'équilibre.

Aussi, compte tenu de l'orientation magnétique du premier aimant 31 et du second aimant 32, il est clair sans qu'il soit nécessaire de le préciser que la polarisation magnétique de l'aimant principal 30 n'est pas parallèle à l'axe YY'.

Par ailleurs, et de manière avantageuse, la polarisation magnétique de l'aimant principal 30 peut être essentiellement perpendiculaire, préférentiellement perpendiculaire, à l'axe YY'.

En fonctionnement, dans un tel dispositif électromagnétique 10, un mouvement de rotation de l'aimant principal 30 d'une des positions d'équilibre stable vers l'autre des deux positions d'équilibre stable est induit par le coulissement du premier aimant 31 et du second aimant 32.

La rotation de l'aimant principal 30 de sa seconde position d'équilibre vers sa première position d'équilibre est nommée « cycle direct ».

La rotation de l'aimant principal 30 de sa première position d'équilibre vers sa seconde position d'équilibre est nommée « cycle indirect ».

Le mouvement de rotation de l'aimant principal 30 induit alors une variation temporelle du champ magnétique traversant la bobine conductrice 20 générant ainsi une tension électrique non nulle aux bornes de la bobine conductrice 20.

L'adoption de l'une ou l'autre des positions d'équilibre stable par l'aimant principal 30 est régie par l'amplitude d'interaction entre ledit aimant principal 30 et les aimants actionneurs 31, 32.

Autrement dit, si le premier aimant 31 est plus proche de l'aimant principal 30 que ne l'est le second aimant 32, ledit aimant principal 30 adoptera la première position d'équilibre.

A contrario, si le second aimant 32 est plus proche de l'aimant principal 30 que ne l'est le premier aimant 31, ledit aimant principal 30 adoptera le seconde position d'équilibre stable.

A titre illustratif, l'aimant principal 30 peut être, à un instant initial, dans la seconde position d'équilibre stable. Autrement dit, le second aimant 32 se trouve plus à proximité de l'aimant principal 30 que le premier aimant 31.

Une force d'origine mécanique par exemple exercée sur le premier aimant 31 dans la direction XX' permet alors d'engager le coulissement du premier aimant 31 et du second aimant 32, de sorte que le premier aimant 31 s'approche de l'aimant principal 30 et le second aimant 32 s'en éloigne.

Donc lors du coulissement des deux aimants actionneurs, l'interaction magnétique entre le second aimant 32 et l'aimant principal 30 diminue, tandis que celle entre le premier aimant 31 et l'aimant principal 30 augmente, faisant ainsi croître l'instabilité magnétique de l'aimant principal 30.

Une rotation brutale de l'aimant principal 30 autour de l'axe YY' est alors observée dès lors que l'instabilité magnétique induite par le coulissement des deux aimants actionneurs n'est plus tenable.

Ainsi, la rotation de l'aimant principal 30 est induite sans exercer de contact avec ledit aimant principal 30, limitant *de facto* les problèmes d'usure et de fiabilité. La retournement de l'aimant principal 30 induit une inversion rapide de la direction du flux traversant la bobine et donc une variation temporelle maximale du flux magnétique. La tension induite aux bornes de la bobine conductrice 20 par la variation de flux magnétique la traversant permet de générer un courant électrique qui peut circuler dans une charge électrique connectée aux bornes de ladite bobine conductrice 20. Le travail mécanique utilisé pour faire coulisser les aimants 31 et 32 est ainsi converti en énergie électrique.

Par ailleurs, la disposition de l'aimant principal 30 dans le volume interne V de la bobine conductrice 20 permet d'augmenter la part de flux utile à la génération de la tension électrique aux bornes de ladite bobine conductrice 20. Il est alors possible de considérer un aimant principal 30 de plus faibles dimensions.

En outre, un aimant principal 30 logé dans le volume interne V de la bobine conductrice 20 rend le dispositif électromagnétique 10 plus compact.

Le dispositif électromagnétique 10 peut également comprendre un moyen de rappel agissant sur l'un des aimants actionneurs agencé de sorte que l'aimant principal 30 soit contraint d'adopter une des deux positions d'équilibre stable lorsqu'aucune force extérieure n'est exercée sur le premier aimant 31 et le second aimant 32.

Par exemple, le moyen de rappel peut être agencé de manière à forcer le second aimant 32 à imposer à l'aimant principal 30 d'adopter la seconde position d'équilibre stable lorsqu'aucune force extérieure ne s'exerce sur le dispositif électromagnétique 10 (et en particulier sur les aimants actionneurs). Autrement dit, le moyen de rappel peut être agencé de manière à forcer le second aimant 32 à être plus à proximité de l'aimant principal 30 que le premier aimant 31. Selon cette configuration, lorsqu'il est au repos l'aimant principal 30 se trouve dans le seconde position d'équilibre.

Toujours selon cette configuration, si le dispositif électromagnétique 10 a été déclenché, et que l'aimant principal 30 a été contraint d'adopter la première position d'équilibre, il est entendu que le moyen de rappel est agencé pour restaurer l'aimant principal 30 dans sa seconde position d'équilibre. Par agencé pour restaurer l'aimant principal 30 dans sa seconde position d'équilibre, on entend également que la force de rappel du moyen de rappel est au moins suffisante pour imposer à l'aimant principal 30 d'exécuter un cycle indirect sans recours à une action extérieure.

Le moyen de rappel est particulièrement avantageux dans la mesure où, après relâchement de la force exercée sur le premier aimant 31 pour déclencher un cycle direct de l'aimant principal 30, le moyen de rappel exerce à son tour une force destinée à rétablir l'aimant principal 30 dans sa seconde position d'équilibre.

Autrement dit, un cycle direct et un cycle indirect de l'aimant principal 30 peuvent être déclenchés par une seule action exercée sur le premier aimant 31, permettant ainsi de doubler la variation temporelle de flux magnétique dans la bobine conductrice 20.

Le moyen de rappel peut comprendre avantageusement un ressort. De manière particulièrement avantageuse, le coulissement de l'un ou l'autre des premier aimant 31 et second aimant 32 en direction de l'aimant principal 30 est limité, respectivement, par une première ou une seconde butée. La première et la seconde butées sont agencées pour empêcher tout contact entre l'aimant principal 30 et, respectivement, le premier aimant 31 et le second aimant 32.

Les figures 1, 3a et 3b illustrent un premier mode de réalisation particulier du convertisseur d'énergie électromagnétique 10 selon la présente invention.

Selon une première variante de ce premier mode de réalisation (illustré à la figure 1), le premier aimant 31, le second aimant 32 et l'aimant principal 30 sont alignés selon l'axe principal XX'.

Par aligné selon l'axe principal XX', on entend que les polarisations magnétiques de ces trois aimants sont colinéaires à l'axe principal XX'.

Cet agencement est particulièrement avantageux dans la mesure où l'aimant actionneur qui impose l'une des deux positions d'équilibre stable à l'aimant principal 30, stabilise également ledit aimant dans cette position d'équilibre (par stabiliser dans une position d'équilibre, on entend en particulier retenir).

Cet effet de stabilisation résulte, pour l'essentiel, de l'attraction mutuelle entre l'aimant principal 30 et l'aimant actionneur qui le contraint à adopter l'une des deux positions d'équilibre stable.

L'effet de retenu de l'aimant principal 30 par un des aimants actionneurs dans une position d'équilibre stable constitue également un moyen d'échappement permettant, lors du déclenchement du convertisseur, une rotation encore plus brutale de l'aimant principal 30.

Il est toutefois notable que l'effet de stabilisation induit par le premier aimant 31 et le second 32 peut également être obtenu pour d'autres orientations desdits aimants.

Ainsi, les figures 3a à 3b illustrent d'autres variantes de ce premier mode de réalisation.

En particulier, les polarités magnétiques du premier aimant 31 et du second aimant 32 (représentées par les flèches A et B sur la figure 3a) présentent une déviation angulaire non nulle par rapport à l'axe principal XX'. Les polarisations magnétiques des deux aimants forment par exemple un angle de 180° .

Par ailleurs selon cette variante, les polarisation magnétiques sont avantageusement en opposition l'une de l'autre.

Dans une autre variante, illustrée à la figure 3b, les polarisations magnétiques du premier aimant 31 et du second aimant 32 (représentées par les flèches C et D sur la figure 3b) présentent une déviation angulaire non nulle par rapport à l'axe principal XX' et forment entre elles un angle inférieur à 180°.

Les actions du premier aimant 31 et du second aimant 32 selon leurs positions relatives à l'aimant principal 30 sont identiques à celles décrites dans la première variante de ce premier mode de réalisation.

De manière particulièrement avantageuse, l'aimant principal 30 peut présenter une symétrie de révolution autour de l'axe YY'. Autrement dit, l'aimant principal 30 peut être un cylindre de révolution d'axe YY'. Selon cette configuration, l'axe YY' est fixe, et peut avantageusement intersecter l'axe principal XX' au centre de la bobine conductrice 20.

Les moyens de maintien 40 de l'aimant principal 30 peuvent comprendre, par exemple, un support d'aimant. L'aimant principal 30 peut être doté d'un ergot, positionné selon l'axe YY', dudit aimant. Le support d'aimant peut comprendre une cavité de forme complémentaire à l'ergot, et dans laquelle ledit ergot est inséré.

Le dispositif électromagnétique 10 peut en outre comprendre une première culasse 50 ferromagnétique et une seconde culasse 50' ferromagnétique disposées symétriquement l'une de l'autre par rapport à un plan comprenant l'axe YY' et l'axe principal XX'.

Chacune des deux culasses ferromagnétiques peut comprendre au moins un matériau ferromagnétique choisi parmi : les alliages à base de Fer et à forte induction à saturation (par exemple une induction à saturation supérieure à 1,5 Tesla) tels que le Fer pur, le fer allié au Si (FeSi), le Fer allié au Ni (FeNi), le fer allié au Co (FeCo). Ces alliages peuvent également comprendre des éléments d'addition tels que le Cr, P, Cu, Al.

Le matériau ferromagnétique peut également comprendre au moins un des éléments choisi parmi : une ferrite de structure spinelle (telle que MnZn, NiZn). Ces dernières, du fait de sa faible conductivité électrique, est particulièrement avantageuse car elle permet de diminuer les pertes par courant de Foucault.

Enfin, le matériau ferromagnétique peut également comprendre au moins un des éléments choisi parmi : un alliage à base de Fe de type verre métallique élaboré sous forme amorphe ou nanocristalline.

Les première 50 et seconde 50' culasses peuvent comprendre chacune deux extrémités agencées de manière à former un logement à l'intérieur duquel l'aimant principal 30 est maintenu. Il est alors clair sans qu'il soit nécessaire de le préciser, que chacune des deux culasses se referment chacune sur l'aimant principal 30. Autrement, les deux extrémités d'une culasse présente un espacement à l'intérieur duquel se trouve l'aimant permanent de manière à ce que chacune des deux culasses forme avec l'aimant une boucle magnétique fermée.

De manière particulièrement avantageuse le logement (ou une cavité) est de forme complémentaire à l'aimant principal 30.

Les culasses ferromagnétiques peuvent être disposées autour de l'aimant principal avec un jeu de largeur parfaitement déterminée de manière à réaliser des entrefers 51, 51' disposés en vis-à-vis l'un de l'autre. La largeur de l'entrefer qui est formé par la lame d'air située entre la surface externe de l'aimant principal 30 et l'une ou l'autre des extrémités de la culasse ferromagnétique détermine l'intensité du flux magnétique circulant dans ladite culasse. La grandeur qui permet de déterminer l'influence de l'entrefer sur le flux magnétique est connue sous le terme de reluctance. A une largeur donnée d'entrefer correspond une valeur de reluctance précise.

L'aimant principal 30 peut avoir une surface externe cylindrique lisse ou, dans une variante, structurée. Dans ce second cas, la surface moyenne de l'aimant reste cylindrique mais localement son profil s'écarte de la surface moyenne selon un motif déterminé. Il est entendu que les écarts au profil moyen sont supérieurs à la rugosité du matériau et sont typiquement supérieurs au dixième de la valeur de l'entrefer.

De cette façon, la lame d'air qui se forme entre l'aimant et la culasse et donc les dimensions de l'entrefer seront variables en fonction de la position angulaire de l'aimant. Un entrefer variable crée un effet dit de reluctance variable et peut ainsi avantageusement contribuer à la vitesse de rotation de l'aimant et à sa stabilisation.

Il est par ailleurs entendu, sans qu'il soit nécessaire de le préciser, que le logement formé par les extrémités des culasses ferromagnétiques est disposé dans le volume interne V de la bobine conductrice 20. En particulier, tel que représenté à la figure 1, le fil conducteur formant la bobine conductrice 20 entoure une première section de chaque culasse ferromagnétique. La première section de chaque culasse ferromagnétique est, tel que représenté à la figure 1, composée de deux bras séparés par l'entrefer.

Chaque culasse forme avec l'aimant principal 30 un circuit magnétique fermé. Autrement dit chacune des culasses ferromagnétique permet de guider le flux magnétique selon un circuit fermé, et ainsi limiter les fuites magnétiques.

De manière particulièrement avantageuse, la première culasse 50 ferromagnétique et la seconde culasse 50' ferromagnétique sont espacées d'un espacement E. Ledit espacement E est agencée pour guider le premier et le second aimant 32 lors de leur coulissement.

Le convertisseur d'énergie électromagnétique 10 en fonctionnement permet une rotation de 180° de l'aimant principal 30. L'adjonction d'un moyen de rappel, tel que décrit dans la description générale de la présente invention, permet également à l'aimant principal 30 d'exécuter un cycle direct et un cycle indirect, correspondant chacun à une rotation de 180° dudit aimant principal 30 autour de l'axe YY'.

Les figures 2a et 2b illustrent un second mode de réalisation particulier du convertisseur d'énergie électromagnétique 10 selon la présente invention.

Selon ce second mode de réalisation, le convertisseur comprend deux aimants stabilisateurs fixes, dits, respectivement, troisième aimant 33 et quatrième aimant 34. Les deux aimants stabilisateurs sont destinés à stabiliser dans l'une des deux positions d'équilibre l'aimant principal 30 dès lors que le convertisseur est au repos.

L'effet de retenu de l'aimant principal 30 par un des aimants stabilisateurs dans une position d'équilibre stable constitue également un moyen d'échappement permettant, lors du déclenchement du convertisseur, une rotation encore plus brutale de l'aimant principal 30.

Par ailleurs, les aimants stabilisateurs sont agencés de manière à ce que l'aimant stabilisateur stabilisant l'aimant principal 30 selon l'une des deux positions d'équilibre voit ses pôles alignés avec ceux de l'aimant principal 30.

De manière avantageuse, le troisième aimant 33 et le quatrième aimant 34 sont disposés en regard, respectivement, de la première extrémité 21 et de la seconde extrémité 22. Par ailleurs, chaque aimant stabilisateur est déporté, selon une direction différente, de l'axe principal XX'. Par déporté, selon une direction différente, de l'axe principale XX', on entend disposé de part et d'autre dudit axe.

En outre selon cet agencement, l'aimant principal 30 est monté sur un support (autrement les moyens de maintien 40) comprenant une glissière 41, la glissière étant agencée pour que le mouvement de rotation de l'aimant principal 30 autour de l'axe YY' entre les deux positions d'équilibre soit accompagné d'un mouvement de translation, permettant l'alignement des pôles de l'aimant principal 30 avec le troisième aimant 33 et le quatrième aimant 34 lorsque ledit aimant principal 30 se trouve respectivement dans la première position d'équilibre ou dans la seconde position d'équilibre.

La glissière 41 peut être rectiligne, ou un peu incurvée.

L'aimant principal 30 peut être guidé dans la glissière par l'ergot disposé sur ledit aimant.

L'aimant principal 30 peut avoir une forme allongée.

Le troisième aimant 33 et le quatrième aimant 34 peuvent avoir chacun leur polarité magnétique parallèle à l'axe principal XX', et en opposition l'une de l'autre.

Par ailleurs, tel que représenté sur les figure 2a et 2b, le troisième aimant 33 et le quatrième aimant 34 peuvent être en vis-à-vis, respectivement, du second aimant 32 et du premier aimant 31.

De manière avantageuse, l'aimant principal 30 peut comprendre une cale disposée sur une de ses extrémités, et destinée à s'interposer entre l'aimant principal 30 et le troisième aimant 33 ou le quatrième aimant 34 lorsque l'aimant principal 30 se trouve, respectivement, dans la première position d'équilibre ou la seconde position d'équilibre. Cette cale peut ainsi absorber les chocs subits par l'aimant principal 30 lors de sa stabilisation.

La cale peut comprendre au moins des matériaux ferromagnétiques choisi parmi : un alliage à base de Fer et à forte induction à saturation tels que le Fer pur, le fer allié au Si (FeSi), le Fer allié au Ni (FeNi), le fer allié au Co (FeCo).

Ces alliages peuvent également contenir des éléments d'addition tels que le Cr, P, Cu, Al.

Le matériau ferromagnétique peut également comprendre au moins un des éléments choisi parmi : une ferrite de structure spinelle (MnZn, NiZn). Ces dernières, du fait de leur faible conductivité, sont particulièrement avantageuses car elles permettent de diminuer.

Enfin, le matériau ferromagnétique peut également comprendre au moins un des éléments choisi parmi : un alliage à base de Fe de type verres métalliques élaborés sous forme amorphe ou nanocristalline.

De manière avantageuse, le convertisseur comprend en outre une culasse ferromagnétique qui comprend deux extrémités de culasse 60 et 60' s'interposant entre la cale de l'aimant principal 30 et le troisième aimant 33 ou le quatrième aimant 34 lorsque l'aimant principal 30 se trouve, respectivement, dans la première position d'équilibre ou la seconde position d'équilibre.

La culasse ferromagnétique permet de guider le flux magnétique produit par l'aimant principal 30 au travers de la bobine conductrice 20 et ainsi limiter les fuites magnétiques.

Le déclenchement du convertisseur peut être engagé en exerçant une force sur le premier aimant 31 par exemple (si l'aimant principal 30 se trouve dans la seconde position d'équilibre). Le coulissement du premier aimant 31, et donc du second aimant 32, est dans un premier temps empêché par l'aimant principal 30 dont les pôles présentent une orientation opposée à celle des pôles du premier aimant 31. Pendant cette phase, le quatrième aimant 34 (stabilisateur), maintient l'aimant principal 30 dans la seconde position d'équilibre, et il y a accumulation d'énergie dans le système à mesure que la force exercée sur le premier aimant 31 augmente. Dès lors que la distance entre le premier aimant 31 et l'aimant principal 30 diminue, cette énergie augmente encore, jusqu'à ce que l'aimant principal 30 ne puisse pu être maintenu dans la seconde position du fait de l'instabilité magnétique induite par l'approche du premier aimant 31.

Il se produit alors un brusque retournement de l'aimant principal 30 de 180°, accompagné d'un déplacement dudit aimant le long de la glissière du support.

L'aimant principal 30, à la suite de ce mouvement, se trouve dans sa seconde position d'équilibre, avec ses pôles alignés avec ceux du quatrième aimant 34.

Le retournement brusque de l'aimant principal 30 génère une variation de flux magnétique au travers de la bobine conductrice 20, faisant ainsi apparaître une tension électrique aux bornes de ladite bobine conductrice 20

Si le convertisseur d'énergie électromagnétique 10 est pourvu du moyen de rappel (par exemple un ressort agissant sur le second aimant 32), l'aimant principal 30 est restauré dans sa seconde position d'équilibre dès que l'on relâche la force exercée sur le premier aimant 31. Le moyen de rappel permet ainsi de doubler la variation temporelle de flux magnétique.

L'effet inverse peut être obtenu à partir de la première position d'équilibre et en exerçant une force sur le second aimant 32.

A titre d'exemple, l'aimant principal 30 peut avoir une rémanence B de 0,5 Tesla, et occuper la moitié du volume interne V de la bobine conductrice 20. La bobine conductrice 20 peut présenter une section transversale de S=0,1 cm², et comprendre N=10 spires. Selon cet agencement, une tension électrique de 2^{∗}N^{∗}B^{∗}S/Δt = 10 Volt peut être générée. Si l'on considère que la résistance du fil électrique formant la bobine conductrice 20 est de R=1 Ω (Ohm), alors l'énergie produite E= e²/RΔt= 1000 µJ.

L'aimant principal 30 et les aimants actionneurs peuvent-être des aimants frittés ou des plasto-aimants. Les plasto-aimants obtenus par moulage présentent l'avantage de pouvoir être fabriqués à bas couts selon des formes et des distributions d'aimantation complexes. De tels aimants présentent les caractéristiques intéressantes suivantes pour des micro-générateurs électromagnétiques et/ou les convertisseurs d'énergie électromagnétique:
- Ils peuvent se conformer aux volumes disponibles dans le dispositif,
- La forme et/ou le profil de leur surface extérieure peut être optimisée pour créer e un entrefer variable au cours du mouvement de l'aimant et donc un effet de reluctance variable qui améliore les performances du convertisseur,
- La distribution de l'aimantation, c'est-à-dire la direction reliant les pôles de l'aimant, peut être optimisée pour améliorer la circulation du flux dans le circuit magnétique et limiter les pertes de flux,
- Les plasto-aimants sont moins sensibles aux chocs et aux problèmes de vieillissement comme la corrosion,

Les plasto-aimants peuvent être obtenus par moulage, en particulier par la technique d'injection plastique. Pour cela un mélange de polymères (par exemple polymère thermodurcissable tel que le PA) et de poudre magnétiques (par exemple SmCo) est chauffé et injecté sous forme fluide dans la cavité d'un moule. Lors de l'injection un champ magnétique est appliqué sur l'empreinte de façon à orienter et aimanter les poudres magnétiques. La pièce refroidit dans cette configuration jusqu'à la solidification et conserve donc sa polarisation magnétique. Il est possible de fabriquer des aimants de forme complexe multipolaires. Des fonctions supplémentaires peuvent être apportées à l'aimant pour faciliter son intégration dans un système mécanique (par exemple l'adjonction d'ergots, ...).

La présente invention concerne également un interrupteur autonome sans fil et/ou sans batterie destiné à assurer la commande de fonctions domotiques telles que l'éclairage, l'ouverture et la fermeture de volets roulants.

## Revendications

1. Dispositif électromagnétique (10) comprenant :
- une bobine conductrice (20) comprenant une première (21) et une seconde (22) extrémité, et s'étendant selon un axe principal XX',
- un aimant principal (30), présentant une symétrie de révolution autour de l'axe YY' perpendiculaire à l'axe principal XX', maintenu par des moyens de maintien (40) dans un volume interne V formé par la bobine conductrice (20), les moyens de maintien (40) autorisant un mouvement de rotation dudit aimant principal (30) autour de l'axe YY' entre deux positions d'équilibre stable dites, respectivement, première position d'équilibre et seconde position d'équilibre,
- un premier aimant (31) et un second aimant (32) actionneurs, disposés dans une glissière, respectivement, en regard de la première extrémité (21) et de la seconde extrémité (22), présentant chacun une polarité magnétique dans un plan perpendiculaire à l'axe YY', les premier (31) et second (32) aimants actionneurs étant agencés pour être entraînés en translation simultanément dans le même sens et parallèlement à l'axe principal XX' dès lors qu'une force est exercée sur l'un ou l'autre des premier (31) et second (32) aimants, le coulissement des premier (31) et second (32) aimants selon l'un ou l'autre des sens définis par la direction de l'axe principal XX' étant adapté pour contraindre l'aimant principal (30) à adopter, respectivement, la première position d'équilibre ou la seconde position d'équilibre.

2. Dispositif selon la revendication 1, dans lequel la polarité magnétique du premier aimant (31) forme un angle alpha avec l'axe principal XX', et la polarité magnétique du second aimant (32) forme avec l'axe principal XX', soit un angle -alpha, soit 180° + alpha, soit 180° - alpha.

3. Dispositif selon la revendication 1 ou 2, dans lequel le dispositif (10) comprend un moyen de rappel agissant sur l'un des premier (31) et second (32) aimants de sorte que l'aimant principal (30) soit contraint d'adopter une des deux positions d'équilibre stable lorsqu'aucune force extérieure n'est exercée sur les premier et second aimants, le moyen de rappel comprenant avantageusement un ressort.

4. Dispositif selon l'une des revendications 1 à 3, dans lequel le coulissement de l'un ou l'autre des premier et second aimants en direction de l'aimant principal (30) est limité, respectivement, par une première et une seconde butées, la première et la seconde butées étant agencées pour empêcher tout contact entre l'aimant principal (30) et, respectivement, le premier et le second aimant.

5. Dispositif selon l'une des revendications 1 à 4, dans lequel le premier aimant (31), le second aimant (32), et l'aimant principal (30) sont alignés selon l'axe principal XX'.

6. Dispositif selon l'une des revendications 1 à 5, dans lequel le dispositif (10) comprend en outre une première culasse (50) et une seconde culasse (50') ferromagnétiques disposées symétriquement l'une de l'autre par rapport à un plan comprenant l'axe YY' et l'axe principal XX'.

7. Dispositif selon la revendication 6, dans lequel les première (50) et seconde (50') culasses comprennent chacune deux extrémités agencées de manière à former un logement à l'intérieur duquel l'aimant principal (30) est maintenu, le logement étant de forme complémentaire à l'aimant principal (30).

8. Dispositif selon la revendication 6 ou 7, dans lequel un espacement est ménagé entre la première et la seconde culasse (50'), ledit espacement étant agencée pour guider le premier et le second aimant lors de leur coulissement.

9. Dispositif selon l'une des revendications 1 à 8, dans lequel le dispositif (10) est soit un convertisseur d'énergie électromagnétique soit un micro générateur électromagnétique.

10. Interrupteur comprenant un dispositif (10) selon l'une des revendications 1 à 9.

## Patentansprüche

1. Elektromagnetische Vorrichtung (10), umfassend:
- eine leitende Spule (20), die ein erstes (21) und ein zweites (22) Ende aufweist und sich entlang einer Hauptachse XX' erstreckt,
- einen Hauptmagneten (30), der eine Rotationssymmetrie um die zur Hauptachse XX' senkrechte Achse YY' aufweist und von Haltemitteln (40) in einem von der leitenden Spule (20) gebildeten Innenvolumen V gehalten wird, wobei die Haltemittel (40) eine Drehbewegung des Hauptmagneten (30) um die Achse YY' zwischen zwei stabilen Gleichgewichtspositionen ermöglichen, die jeweils als erste Gleichgewichtsposition und als zweite Gleichgewichtsposition bezeichnet werden,
- einen ersten Aktuator-Magneten (31) und einen zweiten Aktuator-Magneten (32), die an/in einer Schiene jeweils gegenüber dem ersten Ende (21) bzw. dem zweiten Ende (22) angeordnet sind, und die jeweils eine magnetische Polarität in einer Ebene senkrecht zu der Achse YY' aufweisen, wobei der erste (31) und der zweite (32) Aktuator-Magnet so angeordnet sind, dass sie gleichzeitig in der gleichen Richtung und parallel zur Hauptachse XX' translatorisch angetrieben werden, wenn eine Kraft auf den einen oder den anderen von dem ersten (31) und zweiten (32) Magneten ausgeübt wird, wobei die Verschiebung des ersten (31) und des zweiten (32) Magneten gemäß der einen oder anderen der durch die Richtung der Hauptachse XX' definierten Richtungen angepasst ist, um den Hauptmagneten (30) zu zwingen, die erste Gleichgewichtsposition bzw. die zweite Gleichgewichtsposition einzunehmen.

2. Vorrichtung nach Anspruch 1, wobei die magnetische Polarität des ersten Magneten (31) mit der Hauptachse XX' einen Winkel alpha bildet, und die magnetische Polarität des zweiten Magneten (32) mit der Hauptachse XX' einen Winkel -alpha oder 180°+ alpha oder 180°- alpha bildet.

3. Vorrichtung nach Anspruch 1 oder 2, wobei die Vorrichtung (10) ein Rückstellmittel aufweist, das auf einen von dem ersten (31) und zweiten (32) Magneten einwirkt, so dass der Hauptmagnet (30) dazu gezwungen ist, eine der beiden stabilen Gleichgewichtspositionen einzunehmen, wenn keine äußere Kraft auf den ersten und den zweiten Magneten ausgeübt wird, wobei das Rückstellmittel vorteilhafterweise eine Feder umfasst.

4. Vorrichtung nach einem der Ansprüche 1 bis 3, wobei die Verschiebung des einen oder des anderen von dem ersten und zweiten Magneten in Richtung des Hauptmagneten (30) jeweils durch einen ersten und einen zweiten Anschlag begrenzt ist, wobei der erste und der zweite Anschlag angeordnet sind, um jeden Kontakt zwischen dem Hauptmagneten (30) und dem ersten bzw. dem zweiten Magneten zu verhindern.

5. Vorrichtung nach einem der Ansprüche 1 bis 4, wobei der erste Magnet (31), der zweite Magnet (32) und der Hauptmagnet (30) entlang der Hauptachse XX' ausgerichtet sind.

6. Vorrichtung nach einem der Ansprüche 1 bis 5, wobei die Vorrichtung (10) ferner ein erstes ferromagnetisches Joch (50) und ein zweites ferromagnetisches Joch (50') aufweist, die bezüglich einer Ebene, welche die Achse YY' und die Hauptachse XX' umfasst, symmetrisch zueinander angeordnet sind.

7. Vorrichtung nach Anspruch 6, wobei das erste (50) und das zweite (50') Joch jeweils zwei Enden aufweisen, die so angeordnet sind, dass sie ein Gehäuse bilden, in dessen Innerem der Hauptmagnet (30) aufgenommen ist, wobei das Gehäuse eine zum Hauptmagneten (30) komplementäre Form aufweist.

8. Vorrichtung nach Anspruch 6 oder 7, wobei zwischen dem ersten und dem zweiten Joch (50') ein Abstand vorgesehen ist, der dazu eingerichtet ist, den ersten und den zweiten Magneten bei ihrer Verschiebung zu führen.

9. Vorrichtung nach einem der Ansprüche 1 bis 8, wobei die Vorrichtung (10) entweder ein elektromagnetischer Energiewandler oder ein elektromagnetischer Mikrogenerator ist.

10. Schalter, umfassend eine Vorrichtung (10) nach einem der Ansprüche 1 bis 9.

## Claims

1. An electromagnetic device (10) comprising:
- a conductive coil (20) comprising a first (21) and a second (22) ends, and extending along a main axis XX',
- a main magnet (30), having a symmetry of revolution about an axis YY' perpendicular to the main axis XX', held by holding means (40) in an internal volume V formed by the conductive coil (20), the holding means (40) allowing rotational movement of said main magnet (30) about the axis YY' between two positions of stable equilibrium called, respectively, first position of equilibrium and second position of equilibrium,
- a first (31) and a second (32) actuator magnets disposed in a slide, respectively, facing the first end (21) and the second end (22), each having a magnetic polarity in a plane perpendicular to the axis YY', the first (31) and second (32) actuator magnets being arranged to be driven in translation simultaneously in the same way and parallel to the main axis XX' once a force is exerted on either of the first (31) and second (32) magnets, the sliding of the first (31) and second (32) magnets according to either of the ways defined by the direction of the main axis XX' being adapted to force the main magnet (30) to adopt, respectively, the first position of equilibrium or the second position of equilibrium.

2. The device according to claim 1, wherein the magnetic polarity of the first magnet (31) forms with the main axis XX' an angle alpha, and the magnetic polarity of the second magnet (32) forms with the main axis XX' either an angle -alpha or 180° +alpha, or 180° -alpha.

3. The device according to claim 1 or 2, wherein the device (10) comprises a return means acting on one of the first (31) and second (32) magnets so that the main magnet (30) is forced to adopt one of the two positions of stable equilibrium when no external force is exerted on the first and second magnets, the return means advantageously comprising a spring.

4. The device according to any of claims 1 to 3, wherein the sliding of either of the first and second magnets towards the main magnet (30) is limited, respectively, by a first and a second stops, the first and second stops being arranged to prevent any contact between the main magnet (30) and, respectively, the first and second magnets.

5. The device according to any of claims 1 to 4, wherein the first magnet (31), the second magnet (32), and the main magnet (30) are aligned along the main axis XX'.

6. The device according to any claims 1 to 5, wherein the device (10) further comprises a first ferromagnetic yoke (50) and a second ferromagnetic yoke (50') disposed symmetrically to each other with respect to a plane comprising the axis YY' and the main axis XX'.

7. The device according to claim 6, wherein the first (50) and second (50') yokes comprise each two ends arranged to form a housing inside which the main magnet (30) is held, the housing having a shape complementary to the main magnet (30).

8. The device according to claim 6 or 7, wherein a spacing is arranged between the first and the second yokes (50'), said spacing being arranged to guide the first and the second magnets during their sliding.

9. The device according to any of claims 1 to 8, wherein the device (10) is either an electromagnetic energy converter or an electromagnetic micro-generator.

10. A switch comprising a device (10) according to any of claims 1 to 9.
